# EUROPÄISCHE PATENTSCHRIFT

(11) **EP 2 863 041 B1**
(45) Veröffentlichungstag und Bekanntmachung des Hinweises auf die Patenterteilung: **23.03.2016**
(21) Anmeldenummer: 13188994.1
(22) Anmeldetag: 16.10.2013
(51) Int. Cl.: F02M 37/08, F02M 37/10, F02D 33/00, H05F 3/02, B60K 15/03

(54) **Tank**
Tank
Réservoir

(43) Veröffentlichungstag der Anmeldung: 22.04.2015
(73) Patentinhaber: Magna Steyr Fuel Systems GesmbH, 8261 Sinabelkirchen (AT)
(72) Erfinder: Nabernegg, Karl, 8272 Sebersdorf (AT)
(74) Vertreter: Zangger, Bernd

(56) Entgegenhaltungen:
- US-A1- 2003 084 884
- US-A1- 2004 065 144
- US-A1- 2006 219 318
- US-B1- 6 206 035

## Beschreibung

Die Erfindung geht aus von einem Tank, im speziellen einen Kraftstofftank, der mindestens einen zumindest teilweise elektrisch leitfähigen Behälter, ein elektrisches Einbauteil, das innerhalb des Tanks angeordnet ist, eine Abdeckung , die eine Öffnung für das elektrische Einbauteil verschließt, umfasst.

### Stand der Technik

Bei Tanksystemen ist die Anforderung, eine Erdung des Tanks für die Ableitung beziehungsweise Verhinderung einer möglichen statischen Aufladung im Fahrzeug vorzusehen. Herkömmlich wird diese Erdung entweder bei Stahltanks außen durch Anbringung von Bolzen mit Muttern und/oder Laschen am Tank erreicht, wobei diese Bolzen und/oder Laschen mit Hilfe eines Massebandes mit der Karosseriemasse verbunden sind, oder innenliegend mit Bolzen und/oder Lasche und einem Masseband, welches mit der Masse eines elektrischen Einbauteiles beispielsweise eines Fördermoduls-verbunden ist. Das Verschweißen von Bolzen und/oder Laschen und die Montage des Massebandes sowie die Absicherung der durchgeführten Montage durch Abfragen, bewirken einen erhöhten Kostenaufwand. Im Fall eines Services besteht das Risiko, dass eine fehlende Erdung bei fehlender Verbindung mit der Masseleitung entsteht.

Ein bekanntes Kraftstoffzufuhrsystem mit einer Erdung ist in der gattungsbildenden DE102007021584 A1 beschrieben. Gemäß der Fig. 1 umfasst das bekannte Kraftstoffzufuhrsystem eine Abdeckung 3, die auf der oberen Fläche eines Kraftstofftanks 1 angebracht ist, um eine Öffnung 4, die in der oberen Wand ausgebildet ist, zu verschließen. Die Abdeckung 3 ist aus einem Kunststoff hergestellt und umfasst einen röhrenförmigen Abschnitt, der sich in den Innenraum des Kraftstofftanks 11 erstreckt. Ein Pumpengehäuse 16 ist am unteren Ende des röhrenförmigen Abschnitts montiert. Eine Kraftstoffpumpe 2 ist innerhalb des Pumpengehäuses 16 angeordnet. Eine Steuereinrichtung 18 zum Steuern eines Motors der Kraftstoffpumpe 2 ist innerhalb eines vertieften Abschnitts aufgenommen. Die Steuereinrichtung umfasst einen Erdungsanschluss. Eine elektrisch leitfähige Wand des röhrenförmigen Abschnitts ist elektrisch mit dem Erdungsanschluss der Steuereinrichtung verbunden.

Auch in diesem Beispiel des Standes der Technik ist die Montage der Erdung und das Einbringen der Erdungsfeder mit hohem Aufwand verbunden. Zudem braucht man ein zusätzliches, loses Bauteil, das die Verbindung zwischen Pumpe und Tank herstellt.

Es ist daher Aufgabe der Erfindung einen Tank mit einer Erdung bereitzustellen, wobei die Erdung zuverlässig und ohne zusätzliche Montage von einzelnen Bauteilen erfolgt.

Die Aufgabe wird gelöst durch einen Tank, im speziellen einen Kraftstofftank, mindestens umfassend einen mindestens teilweise elektrisch leitfähigen Behälter, ein elektrisches Einbauteil, das innerhalb des Kraftstofftanks angeordnet ist, eine Abdeckung , die eine Öffnung für das elektrische Einbauteil verschließt, die in einem oberen Abschnitt des Kraftstofftanks ausgebildet ist, wobei die Abdeckung mindestens eine Steckverbindung-umfasst und wobei ein Masseband einen Massepin einer Steckverbindung mit mindestens einem leitfähigen Bereich des Kraftstofftanks verbindet.

Über die Stromversorgung des elektrischen Bauteiles gibt es einen Masseanschluss direkt zur Karosseriemasse des Fahrzeugs. Durch die Verbindung des Masseanschlusses und durch das Anstecken der Stromversorgung am Verschlussdeckel am Tank wird eine zuverlässige und wartungsneutrale Masseverbindung zur Verfügung gestellt.

Die erfindungsgemäße Lösung hat den Vorteil, dass der Kraftstofftank ein Masseband enthält, das im Kunststoff der Abdeckung eingegossen ist. Durch diese Maßnahme vermindert sich die Anzahl der Teile, da das Masseband sicher in der Abdeckung eingegossen ist. Auch das Risiko, dass nach einem Servicefall die Massenanbindung nicht mehr existiert wird minimiert.

Vorteilhafterweise ist das Masseband so ausgelegt, dass es teilweise auf der Oberfläche der Abdeckung eingegossen ist. Dadurch wird über das Verschlussteil ein direkter Kontakt mit dem Tank hergestellt und ein sicherer Masseschluss ermöglicht.

Vorteilhafterweise besteht das Masseband aus einer Metallfolie. Eine Metallfolie ist als Einlage einfach in die Spritzform der Abdeckung einzulegen und anschließend zu umspritzen.

Es ist weiterhin von Vorteil, wenn das Masseband aus einem leitfähigen Kunststoff hergestellt ist. Dann lässt sich die Abdeckung auf einfache Art und Weise mit einem zwei Komponenten Spritz -Gussverfahren herstellen. Vorteilhafterweise weist der Kraftstofftank mit der Abdeckung einen Massepin auf, der den Masseschluss mit dem Masseband herstellt.

### Beschreibung der Erfindung

Die Erfindung wird nachfolgend beispielhaft unter Bezugnahme auf die beigefügte Zeichnung beschrieben.

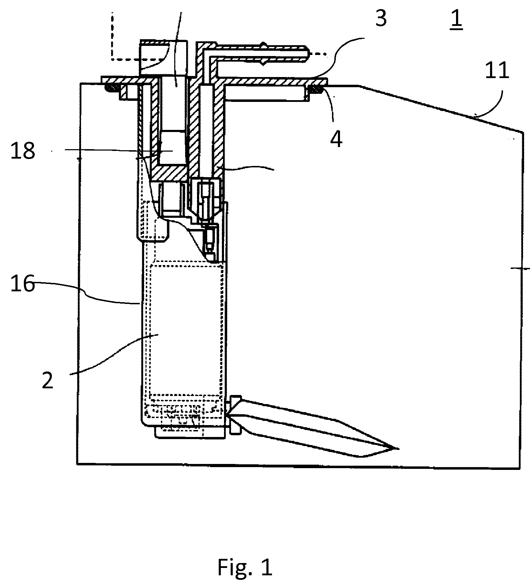

Fig. 1 zeigt eine schematische Darstellung des Standes der Technik
Fig. 2 zeigt eine Aufsicht auf eine erfindungsgemäße Abdeckung,
Fig. 3 zeigt einen Schnitt durch die erfindungsgemäße Abdeckung.

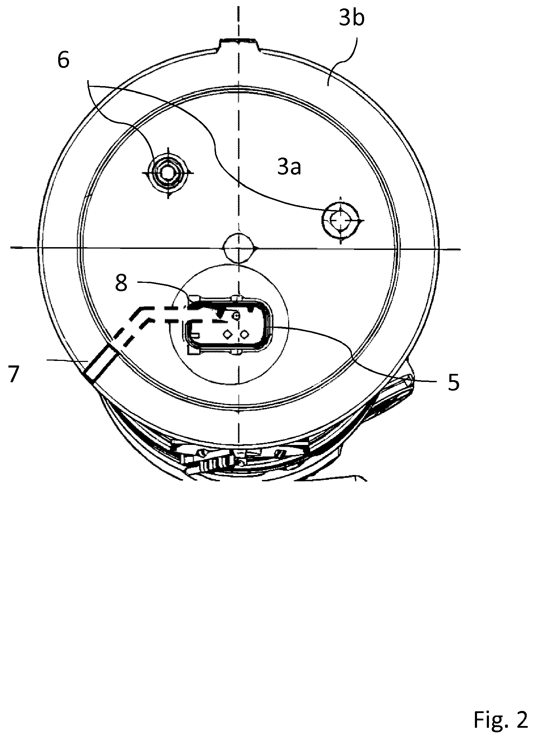

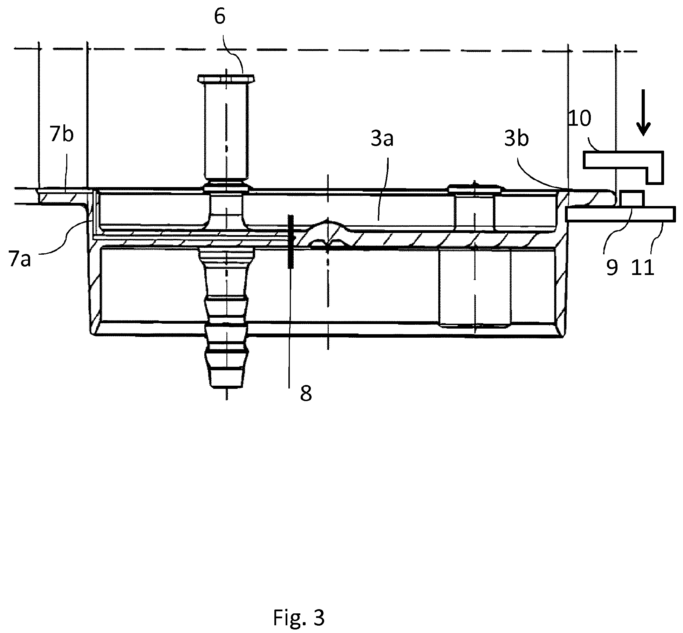

Die erfindungsgemäße Lösung wird anhand eines Beispiels aus den Figuren 2 und 3 beschrieben. Figur 2 zeigt eine Aufsicht auf eine Abdeckung 3. Die Abdeckung 3 weist einen äußeren Flanschbereich 3b auf, der einen Rand bildet. Der innere Bereich 3a der Abdeckung wölbt sich im Ausführungsbeispiel aus der Zeichnungsebenen nach hinten. Die Abdeckung 3 verschließt eine Öffnung in einem Kraftstofftank, beispielsweise eine Serviceöffnung für eine Kraftstoffpumpe oder ein anderes elektrisches Einbauteil. Die Abdeckung weist in diesem Ausführungsbeispiel Öffnungen 6 auf, die beispielsweise für eine Kraftstoffleitung vorgesehen sind. Im unteren Bereich der Abdeckung 3 ist ein Steckverbinder 5 angedeutet. Der Steckverbinder 5 weist mehrere Pins auf. Über den Steckverbinder 5 wird das elektrische Einbauteil mit elektrischer Energie versorgt. Gestrichelte eingezeichnet ist ein Masseband 7, das sich vom Massepin 8 bis zum Flanschfläche 3b erstreckt. Der Verlauf ist dabei beispielhaft gekrümmt oder geknickt dargestellt, aber auch eine geradlinige Verbindung zwischen Massepin 8 und Flanschbereich 3b ist von Vorteil.

Im Schnittbild der Figur 3 ist die Erfindung deutlicher zu erkennen. Die Abdeckung 3 zeigt den Innenbereich 3a sowie den Flanschbereich 3b.

Im Schnittbild ist zudem ein Anschluss zu erkennen der in der Öffnung 6 angebracht ist. Der Massepin 8 erstreckt sich von der Oberseite des Innenbereichs 3a mindestens bis zum Masseband. Innerhalb der Kunststoffschicht des Innenbereiches 3a ist das Masseband 7 umspritzt. Es verläuft vom Massepin 8 ausgehend bis zum Rand der Abdeckung 3. Dort folgt es der, in diesem Fall, treppenförmigen Ausgestaltung und verläuft im Kunststoff nach oben und tritt im Bereich 7b an die Oberfläche. Im Bereich 7b verläuft das Masseband 7 nur noch einseitig umspritzt auf der Oberfläche des Flanschbereiches 3b. Das bedeutet, dass das Masseband 7 über seinen gesamten Verlauf in einem beidseitig umspritzten Bereich 7a verläuft und nur im Bereich des Flansches 3b, in dem es zwingend zur Berührung mit dem Verschlussteil kommt, an der Oberfläche aufgebracht ist

In Figur 3 ist der Einbau der Abdeckung 3 im Kraftstofftank 1 angedeutet. Der Behälter 11 des Kraftstofftanks 1 weist eine Aufnahme 9 auf. Diese Aufnahme ist entweder in das Material eingeprägt oder in sonstiger Weise aufgebracht, beispielsweise aufgeschweißt. An dieser Aufnahme 9 liegt die Abdeckung 3 an. Über einen geeigneten Aufnahmering 10 wird die Abdeckung mit dem Behälter 11 verbunden. Dabei ist es möglich, einen geschraubten Aufnahmering zu verwenden oder aber Aufnahme und Aufnahmering so zu gestalten, dass eine Schnappverbindung herstellbar ist.

Über den Aufnahmering 10 der mindestens auf seiner Innenseite aus einem metallischen Wirkstoff besteht, wird der Masseschluss vom Masseband, das sich entlang des Flanschflächebereiches 3B erstreckt über den Aufnahmering zum Behälter des Kraftstofftankes hergestellt. In einer Ausführungsform der Erfindung wird ein metallisches Masseband verwendet, das bei der Herstellung der Abdeckung 3 in das Spritzwerkzeug eingelegt und umspritzt wird. Dabei werden zwei unterschiedliche Bereiche hergestellt, ein beidseitig umspritzter Bereich 7a sowie ein einseitig umspritzter Bereich 7b . Eine alternative Lösung stellt eine Zweikomponentenherstellung der Abdeckung dar. Dabei wird auf eine erste Kunststoffkomponente, die isolierende ist, ein leitender Bereich aus einem leitfähigen Kunststoff eingespritzt und dieser wiederum von einem isolierenden Kunststoff abgedeckt.

Der in der Figur 3 gezeigte Massepin 8 kann ein Teil eines Steckverbinders sein. Der Steckverbinder wird im einfachsten Fall für die Energieversorgung eines elektrischen Einbauteiles verwendet. Der Steckverbinder 5 ist in Figur 3 nicht eingezeichnet. Er ist für die Ausführung der Erfindung auch nicht zwangsweise notwendig. Es wäre auch möglich, die Erfindung so auszugestalten, dass ein Massepin über eine separate Masseleitung mit dem Fahrzeug verbunden ist, und nicht in Kombination mit einer elektrischen Leitung eingesetzt wird.

Es ist auch nicht notwendig, dass der Kraftstofftank 1 vollständig aus metallischem Werkstoff besteht. Es ist auch möglich einen Kraftstofftank zu verwenden, der teilweise Kunststoff beinhaltet.

Die Ausführung wurde in Bezug auf einen Kraftstofftank beschrieben ist aber für jeden zu erdenden Tank anwendbar.

### Bezugszeichenliste

- 1: Kraftstofftank
- 2: Kraftstoffpumpe
- 3: Abdeckung
- 3a: Innenbereich
- 3b: Flanschbereich
- 4: Öffnung
- 5: Steckverbinder
- 6: Öffnung
- 7: Masseband
- 7a: beidseitig umspritzter Bereich
- 7b: einseitig umspitzter Bereich
- 8: Massepin
- 9: Aufnahme
- 10: Aufnahmering
- 11: Behälter
- 16: Pumpengehäuse
- 18: Steuereinrichtung

## Patentansprüche

1. Zu erdender Tank, mindestens umfassend einen mindestens teilweise elektrisch leitfähigen Behälter (11) des Tanks, ein elektrisches Einbauteil (2), das innerhalb des Tanks angeordnet ist, eine Abdeckung (3), die eine Öffnung (4) für das elektrische Einbauteil (2) verschließt, die in einem Abschnitt des Tanks ausgebildet ist, wobei die Abdeckung (3) mindestens eine Steckverbindung (5) umfasst, **dadurch gekennzeichnet, dass** ein Masseband (7) einen Massepin (8) einer Steckverbindung (5) mit mindestens einem leitfähigen Bereich des zu erdenden Tanks verbindet.

2. Tank nach Anspruch 1, **dadurch gekennzeichnet, dass** der Tank ein Kraftstofftank eines Fahrzeugs ist.

3. Tank nach Anspruch 1 oder 2, **dadurch gekennzeichnet, dass** das elektrische Einbauteil eine Kraftstoffpumpe ist.

4. Tank nach einem der vorherigen Ansprüche, **dadurch gekennzeichnet, dass** sich der Abschnitt für die Öffnung im oberen Bereich des Tanks befindet.

5. Tank nach einem der vorherigen Ansprüche, **dadurch gekennzeichnet, dass** das Masseband (7) im Kunststoff der Abdeckung (3) eingegossen ist.

6. Tank nach einem der vorherigen Ansprüche, **dadurch gekennzeichnet, dass** das Masseband (7) teilweise auf der Oberfläche der Abdeckung (3) eingegossen ist.

7. Tank nach einem der vorherigen Ansprüche, **dadurch gekennzeichnet, dass** das Masseband (7) aus einer Metallfolie besteht.

8. Tank nach einem der vorherigen Ansprüche, **dadurch gekennzeichnet, dass** das Masseband (7) aus einem leitfähigen Kunststoff herstellt ist.

## Claims

1. Tank which is to be earthed, at least comprising an at least partially electrically conductive container (11) of the tank, an electric built-in component (2), which is arranged within the tank, a cover (3), which closes an opening (4) for the electric built-in component (2), said opening being formed in a section of the tank, wherein the cover (3) comprises at least one plug connection (5), **characterized in that** an earthing strip (7) connects an earth pin (8) of a plug connection (5) to at least one conductive region of the tank which is to be earthed.

2. Tank according to Claim 1, **characterized in that** the tank is a fuel tank of a vehicle.

3. Tank according to Claim 1 or 2, **characterized in that** the electric built-in component is a fuel pump.

4. Tank according to one of the preceding claims, **characterized in that** the section for the opening is situated in the upper region of the tank.

5. Tank according to one of the preceding claims, **characterized in that** the earthing strip (7) is moulded into the plastic of the cover (3).

6. Tank according to one of the preceding claims, **characterized in that** the earthing strip (7) is partially moulded onto the surface of the cover (3).

7. Tank according to one of the preceding claims, **characterized in that** the earthing strip (7) is composed of a metal film.

8. Tank according to one of the preceding claims, **characterized in that** the earthing strip (7) is produced from a conductive plastic.

## Revendications

1. Réservoir à relier à la terre, comprenant au moins une cuve (11) au moins en partie électriquement conductrice du réservoir, un composant électrique (2), qui est disposé à l'intérieur du réservoir, un couvercle (3), qui ferme une ouverture (4) pour le composant électrique (2), qui est formé dans une partie du réservoir, dans lequel le couvercle (3) comprend au moins un assemblage par enfichage (5), **caractérisé en ce qu'**une bande de masse (7) relie une broche de masse (8) d'un assemblage par enfichage (5) à au moins une région conductrice du réservoir à relier à la terre.

2. Réservoir selon la revendication 1, **caractérisé en ce que** le réservoir est un réservoir de carburant d'un véhicule.

3. Réservoir selon la revendication 1 ou 2, **caractérisé en ce que** le composant électrique est une pompe à carburant.

4. Réservoir selon l'une quelconque des revendications précédentes, **caractérisé en ce que** la partie pour l'ouverture se trouve dans la région supérieure du réservoir.

5. Réservoir selon l'une quelconque des revendications précédentes, **caractérisé en ce que** la bande de masse (7) est moulée dans la matière plastique du couvercle (3).

6. Réservoir selon l'une quelconque des revendications précédentes, **caractérisé en ce que** la bande de masse (7) est moulée en partie sur la surface du couvercle (3).

7. Réservoir selon l'une quelconque des revendications précédentes, **caractérisé en ce que** la bande de masse (7) se compose d'une feuille métallique.

8. Réservoir selon l'une quelconque des revendications précédentes, **caractérisé en ce que** la bande de masse (7) est fabriquée en une matière plastique conductrice.
